Europäisches Patentamt

European Patent Office

Office européen des brevets

(11) Publication number: 0 091 541
B1

# EUROPEAN PATENT SPECIFICATION

(45) Date of publication of patent specification: 20.04.88

(51) Int. Cl.⁴: A 23 G 9/28

(21) Application number: 83101265.3

(22) Date of filing: 10.02.83

(54) Closure door for the freezing cylinder in an ice cream making machine of the horizontal-cylinder and batch-operation type.

(30) Priority: 13.04.82 IT 1514182 u

(43) Date of publication of application:
19.10.83 Bulletin 83/42

(45) Publication of the grant of the patent:
20.04.88 Bulletin 88/16

(84) Designated Contracting States:
AT BE CH DE FR GB LI LU NL SE

(56) References cited:
GB-A- 852 999
US-A-1 425 814
US-A-2 502 329

(73) Proprietor: Carpigiani Bruto Macchine
Automatiche S.p.A.
45, Via Emilia
I-40011 Anzola Emilia, Bologna (IT)

(72) Inventor: Manfroni, Ezio
56, Via Altopiano
I-40037 Sasso Marconi (Bologna) (IT)

(74) Representative: Porsia, Attilio et al
c/o Succ. Ing. Fischetti & Weber Via Caffaro 3
I-16124 Genova (IT)

Courier Press, Leamington Spa, England.

EP 0 091 541 B1

## Description

This invention relates to the closure doors for the freezing cylinder of an ice cream making machine of the horizontal-cylinder and batch-operation type.

The doors for closing the freezing cylinder of said machines are usually provided with a port to draw out the product, said port being tangential to the lower edge of the freezing cylinder and closed by a suitable closure member. The object of this invention is to provide a means for easily locking and unlocking said closure member, and for guiding it from the closed position to a partially or completely opened position of the port to draw out the product.

Other objects and advantages of this invention will be more apparent in the following specification of an embodiment thereof, made with reference to the accompanying drawings, wherein:

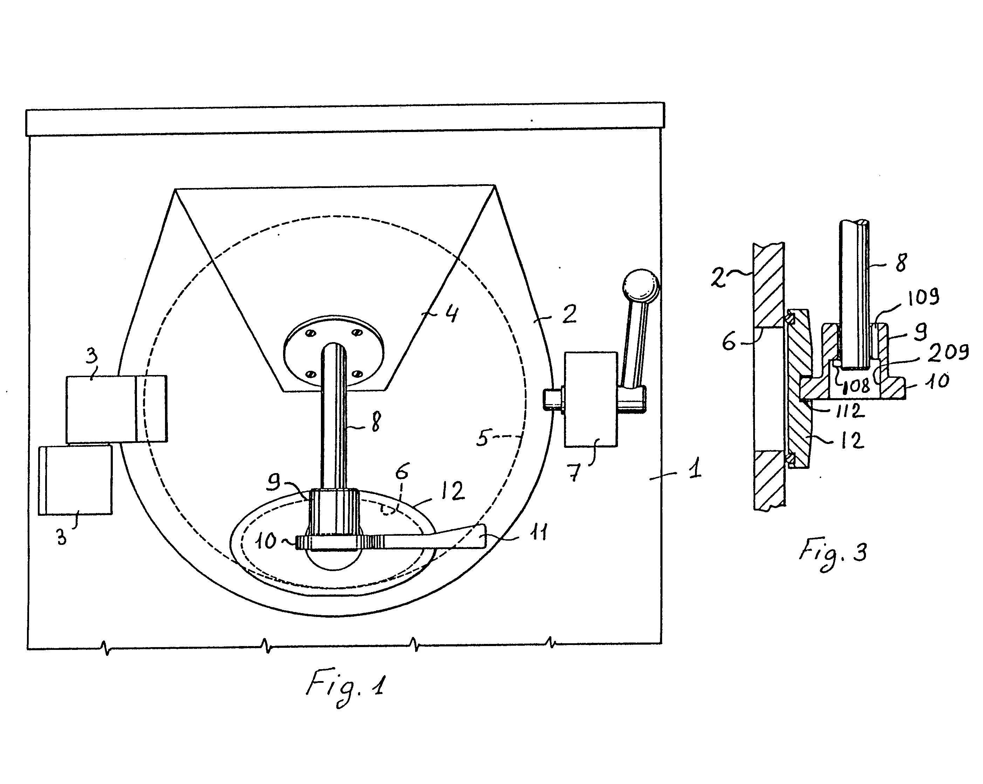

Figure 1 is an end plan view of the closure door for the freezing cylinder of an ice cream making machine according to the invention;

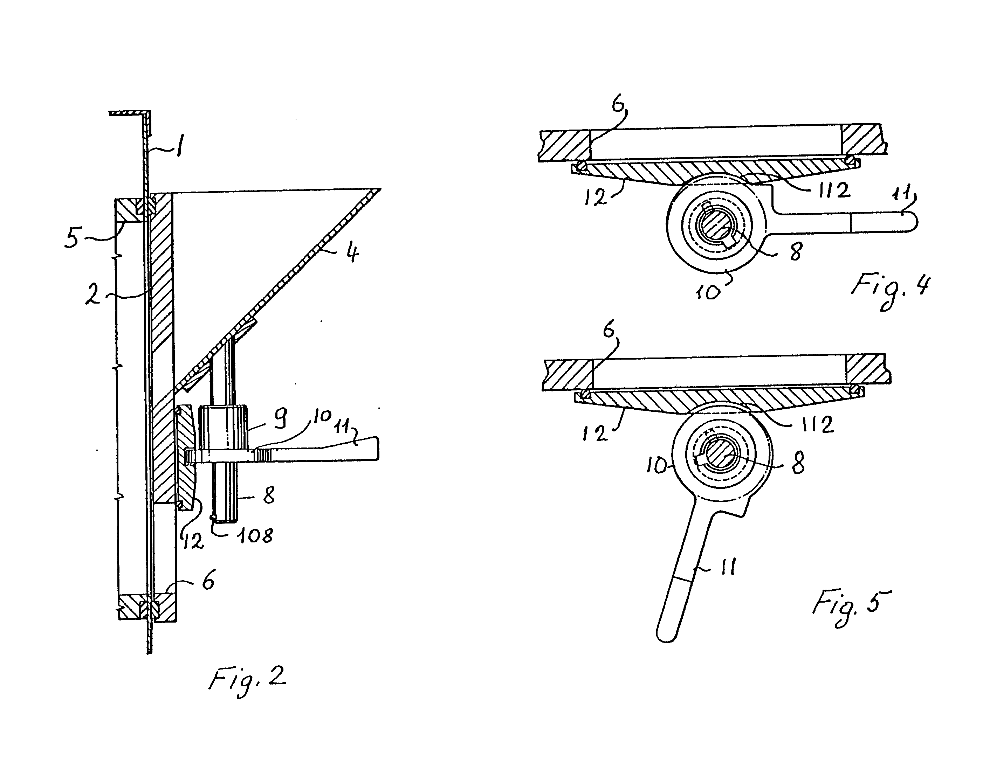

Figure 2 is a longitudinal sectional view of the door of Figure 1, with some portions in elevational view;

Figure 3 is a longitudinal sectional view of the device for guiding and locking the closure member associated with the door of Figures 1 and 2; and

Figures 4 and 5 are cross-sectional views of the members of Figure 3 in the locked and unlocked position of the closure member, respectively.

With reference to the drawings, the numeral 1 indicates the front panel of the casing of an ice cream making machine, having hinged thereto a door 2 by means of a hinge 3.

The door 2 is provided, at the top, with a hopper 4 for admitting the liquid mixture into the freezing cylinder 5, and is provided, at the bottom, with a discharge port 6 tangential to the lower edge of the cylinder 5.

The numeral 7 indicates the locking eccentric latch for the door 2.

In the machines manufactured by the Applicant prior to the present invention, the port 6 is closed by a closure member secured to an end of an arm the other end of which is hinged to the door 2, and provided with screw means to press the closure member against the edge contour of the port 6.

This system is somewhat complicated and is subject to some disadvantages in the opening and closing operations.

This invention aims to avoid the disadvantages of the previous devices by providing an opening and closing device for the discharge port 6, which can be easily locked and unlocked and can be moved to either the opened and closed positions by a simple action, and which is safe and reliable in operation.

Moreover, the device of the invention can be easily assembled and disassembled for cleaning and maintenance purposes.

According to this invention, associated with the hopper 4 is a vertical tubular guide member 8 extending downwards to the level of the port 6 in the door 2.

The guide member 8 has threaded thereon, in axially slidable and rotatable manner a tubular sleeve 9 provided with a flange 10 the outer contour of which is shaped like an excentric cam, and provided with a radial control handle 11.

The free end of the guide member 8 has a radial pin 108, and the sleeve 9 has an axial groove 109 extending along the entire bore receiving the guide member 8, so as to allow the passage of said pin 108 downwards into the lower portion of the sleeve, where an enlarged bore 209 is formed.

The closure member 12 for the port 6 is formed with a central horizontal groove 112 which engages with the cam-shaped flange 10, whereby the latter, when in a given angular position, presses the closure member into adhering contact against the discharge port 6.

By rotating the cam-shaped flange 10 by means of the handle 11, the pressure on the closure member 12 is relieved, though the latter is still inter-engaged with the cam 10 by virtue of the groove 112. Thus, by lifting the handle 11 so as to slidingly move the sleeve 9 along the guide member 8, the closure member 12 is lifted so as to open the port 6.

Finally, by further rotating the cam-shaped flange 10, the latter disengages from the groove 112, so that the device can be disassembled. In this position, the pin 108 is in line with the groove 109 and, therefore, also the sleeve 9 may be disassembled.

Of course, the invention is not limited to the embodiment here shown and described, but it embraces all changes and modifications within the scope of the claim.

## Claim

A closure door for the freezing cylinder of an ice cream making machine of the horizontal-cylinder and batch-operation type which is provided in the lower portion thereof with an ice cream discharge port (6) which is closed by a suitable closure member (12), characterized in that said closure member (12) is provided, on the face thereof facing outwards, with a groove (112) wherein the peripheral edge of a cam-shaped excentric disc member (10) is engaged, said disc member (10) being carried by a tubular sleeve (9) which is rotatably and axially slidably keyed on a guide rod (8) parallel to the plane of the door, said sleeve (9) being provided with a radial control handle (11), whereby in a first rotational position of said cam-shaped disc said closure member (12) is pressed against the door, in a second position of the cam-shaped disc (10) the closure member (12) is freely slidable with respect to the plane of the door though still engaged with said cam-shaped disc (10) for movement along the guide rod (8), and in a third rotational position of the cam-shaped disc (10) the closure member (12) is disengaged from the cam-shaped disc (10).

## Revendication

Une porte de fermeture pour le cylindre de congélation d'une machine à crème glacée, du type à cylindre horizontal et opérant par fournée qui est pourvu dans sa partie inférieure d'un orifice d'écoulement (6) de la crème glacée qui est fermé par un organe de fermeture approprié (12), caractérisée en ce que ledit organe de fermeture (12) est pourvu sur sa face tournée vers l'extérieur, d'une rainure (112) dans laquelle s'enclenche le bord périphérique d'un organe (10) excentré en forme de came, ledit organe (10) étant porté par un manchon tubulaire (9) qui est engagé sur une tige de guidage (8) parallèle au plan de la porte de manière à pouvoir tourner et à se déplacer axialement, ledit manchon étant pourvu d'une poignée radiale de commande (11), par laquelle dans une première position de rotation dudit disque en forme de came, ledit organe de fermeture (12) est pressé contre la porte, dans une seconde position du disque (10) en forme de came l'organe de fermeture (12) peut se déplacer librement par rapport au plan de la porte, bien qu'il soit encore engagé avec le disque (10) en forme de came pour un movement le long de la tige de guidage (8) et dans une troisième position de rotation du disque (10) en forme de came, l'organe de fermeture (12) est libéré du disque (10) en forme de came.

## Patentanspruch

Abschlußtür für den horizontalen Gefrierzylinder einer schubweise arbeitenden Speiseeismaschine, die in ihrem unteren Bereich mit einer Speiseeisausgabeöffnung (6) versehen ist, die von einem geeigneten Abschlußorgan (12) abgeschlossen ist, dadurch gekennzeichnet, daß das Abschlußorgan (12) an seiner nach außen weisenden Seite mit einer Nut (112) versehen ist, in die der Umfangsrand einer exzentrischen Nockenscheibe (10) eingreift, die ihrerseits von einer rohrförmigen Hülse (9) getragen ist, welche auf eine Führungsstange (8) drehbar und axial parallel zur Ebene der Tür verstellbar aufgekeilt ist, wobei die Hülse (9) mit einem radialen Betätigungshandgriff (11) versehen ist, so daß das Abschlußorgan (12) in einer ersten Drehstellung der Nockenscheibe gegen die Tür gepreßt wird, das Abschlußorgan (12) in einer zweiten Stellung der Nockenscheibe (10) gegenüber der Ebene der Tür frei verschiebbar ist, aber noch zur Verstellung entlang der Führungsstange (8) mit der Nockenscheibe (10) in Eingriff steht und in einer dritten Drehstellung der Nockenscheibe (10) das Abschlußorgan (12) außer Eingriff mit der Nockenscheibe (10) kommt.

Fig. 1

Fig. 3

0 091 541

Fig. 4

Fig. 5

Fig. 2